# EUROPEAN PATENT APPLICATION

(11) **EP 0 835 919 A1**
(43) Date of publication of application: **15.04.1998**
(21) Application number: 97117066.7
(22) Date of filing: 01.10.1997
(51) Int. Cl.: C09K 3/18

(54) **Corrosion-inhibiting additive for sodium chloride-based antifreeze preparations for treating road surfaces, and antifreeze preparation containing said additive**

(30) Priority: 14.10.1996 IT TO960840
(71) Applicant: Mastra di Palieri L. & C. s.a.s., 10121 Torino (IT)
(72) Inventor: Palieri, Luigi, 10100 Torino (IT)
(74) Representative: Modiano, Guido, Dr.-Ing.

(57) **Abstract**

A corrosion-inhibiting additive for sodium chloride-based antifreezing preparations for treating road surfaces, including an inorganic phosphor sodium salt, particularly neutral sodium pyrophosphate having the chemical formula Na₄P₂O₇, with optional traces of methylene blue in an amount equivalent to 0.002% by weight. An aqueous solution containing 12% by weight of the additive is used as moisturizer for the sodium chloride of said antifreezing preparations.

## Description

The present invention relates to a corrosion-inhibiting additive for sodium chloride-based antifreezing preparations used for the antifreezing treatment of road surfaces and of reinforced-concrete structures such as bridges, viaducts and the like, and to the antifreezing preparation containing said additive.

It is known to use sodium chloride for the antifreezing treatment of road surfaces in general, used both as an aqueous solution and in the solid phase. In the second case, which is currently more widely used, the salt is first moisturized with water or with a water-based solution having a low calcium chloride content in order to provide a solid antifreezing preparation which is spread on the road surface by means of self-propelled vehicles known as salt spreaders.

Road surfaces are treated with this antifreezing preparation both preemptively, in order to prevent the formation of ice caused by the freezing of atmospheric moisture, and to eliminate snow and/or ice produced by atmospheric precipitations.

However, to achieve these preemptive and elimination functions, the antifreezing preparation must have a high content of sodium salt. Typically, a preparation capable of preventing the formation of ice with ambient temperatures between 0° C and -10°C has an 80/20 ratio of NaCl to H₂O or NaCl to H₂O+CaCl₂ if an aqueous solution of calcium chloride is used as moisturizer.

Such sodium chloride contents cause the antifreezing treatment to be highly corrosive both for passing vehicles and for pavement structures and metallic reinforced-concrete frames, on which in particular they generate significant localized corrosion, known as pitting, which leads to rapid deterioration of said structures and frames.

The solution to this severe problems linked to the use of said antifreezing preparations based on sodium salt, which are nonetheless highly advantageous both from the economical point of view and from the point of view of preservation of the grip characteristics of the road surface, must be solved chemically by using corrosion inhibitors which are capable of reacting only once with the surface of the metal in order to form a self-restoring protective film on said surface.

A principal aim of the present invention is to provide a corrosion-inhibiting additive of the above-mentioned type, which is suitable to contrast the specific corrosion effects caused by chlorides and has spontaneous film-forming chemical and physical properties which also contrast the action of chloride, in order to effectively contrast pitting of the metal frames and structures of the road surface.

Another important object of the present invention is to provide a water-soluble corrosion-inhibiting additive which is highly mobile in an aqueous environment, as required in order to easily reach the sites of the metals to be protected, and also has high electrochemical and electrostatic affinity for said metals.

Another important object of the present invention is to provide a corrosion-inhibiting additive which is economically advantageous, in no way alters the grip characteristics of the road surface, and whose film-forming reaction, with respect to the metal surfaces to be protected, is substantially independent of ambient temperature at least in the temperature range within which the sodium salt preparation used for the antifreezing treatment is active.

With these aims and other important objects of the invention which will become apparent from the detailed description that follows, the present invention provides a corrosion-inhibiting additive whose substantial characteristic is the fact that it comprises an inorganic phosphor sodium salt.

Typically, the inorganic salt according to the present invention is neutral sodium pyrophosphate, which has the chemical formula Na₄P₂O₇, optionally with the addition, mainly for color-marking purposes, of a very small percentage of methylene blue.

Preferably, said inorganic phosphor sodium salt is added to the water or to the water-based solution used to moisturize the sodium chloride of the antifreezing preparation, in a percentage (by weight) between 10 and 13%, typically 12%.

The description of examples of antifreezing preparation that includes the corrosion-inhibiting additive according to the present invention now follows.

Example: a moisturizing solution for the antifreezing sodium salt is prepared which contains the addition of 12 grams of Na₄P₂O₇ per liter of water or per kg of aqueous solution; the inorganic phosphor salt is preferably mixed with methylene blue traces, for example in a percentage ratio of 99.998% Na₄P₂O₇ and 0.002% methylene blue.

The sodium chloride is treated with the following moisturizing solutions in the following percentage by weight:

| | |
|---|---|
| anhydrous NaCl | 80%-99% |
| 12% Na₄P₂O₇ moisturizing solution | 1 -20%; (1) |
| anhydrous NaC1 moisturizing solution with 11.998% Na₄P₂O₇ | 80% |
| and with 0.002% methylene blue | 20% (2) |

and the solid preparation to be spread directly on the road surface being treated is obtained.

If requested by particular operating requirements, the above-described additive can be mixed directly, in the solid phase, in the form of powder and in a percentage between 0.25 and 0.30% by weight, with the anhydrous sodium chloride, which can thus be used directly after moisturizing alone, for example with tap water, or as it is.

The formulations according to formulae (1) and (2) characterize the antifreezing preparation according to the present invention, which the many tests performed have shown to exhibit, in isothermal conditions at 0°C, reductions in the corrosion rate on the order of 70 and 80% by virtue of a corresponding reduced corrosion factor, for which values between 0.270 and 0.278 have been found in said temperature conditions with reference to the value 1 which those skilled in the art use to reference through corrosion (destruction of specimen).

The invention is of course not limited by the described example and many variations may be applied to the additive and to the antifreezing preparation that contains said additive without thereby abandoning the scope of said invention defined by the appended claims.

## Claims

1. A corrosion-inhibiting additive for sodium chloride-based antifreezing preparations for treating road surfaces, characterized in that it comprises an inorganic phosphor sodium salt.

2. An additive according to claim 1, characterized in that said inorganic phosphor sodium salt is neutral sodium pyrophosphate having the chemical formula Na₄P₂O₇.

3. An additive according to claim 1 and claim 2, characterized in that said inorganic phosphor salt contains traces of methylene blue in a percentage equal to 0.002% by weight.

4. An antifreezing preparation based on sodium chloride for treating road surfaces, characterized in that it comprises by sodium chloride treated with a moisturizing aqueous solution that includes at least neutral sodium pyrophosphate Na₄P₂O₇ in an amount equivalent to 10-13 grams per kg of solution.

5. An antifreezing preparation according to claim 4, characterized in that it has the following formulation in percentages by weight:
| | |
|---|---|
| anhydrous NaCl | 80%-99% |
| moisturizing solution with 12% Na₄P₂O₇ | 1 -20% (1) |

6. An antifreezing preparation according to claim 4, characterized in that it has the following formulation in percentages by weight:
| | |
|---|---|
| anhydrous NaCl | 80% |
| moisturizing solution with 11.998% Na₄P₂O₇ and with 0.002% methylene blue | 20% (2) |

7. An antifreezing preparation for treating road surfaces, characterized in that it comprises anhydrous sodium chloride mixed with solid sodium pyrophosphate, in a percentage between 0.25 and 0.30% by weight.
